(19) Europäisches Patentamt / European Patent Office / Office européen des brevets

(11) **EP 4 575 916 A1**

(12) **EUROPEAN PATENT APPLICATION**

(43) Date of publication:
**25.06.2025 Bulletin 2025/26**

(21) Application number: **24219377.9**

(22) Date of filing: **12.12.2024**

(51) International Patent Classification (IPC):
**G06N 5/01** (2023.01)    **G06N 7/01** (2023.01)
**G06N 20/00** (2019.01)    G06N 3/126 (2023.01)

(52) Cooperative Patent Classification (CPC):
**G06N 20/00; G06N 5/01; G06N 7/01;** G06N 3/126

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023 JP 2023216935**

(71) Applicant: **Fujitsu Limited
Kawasaki-shi, Kanagawa 211-8588 (JP)**

(72) Inventors:
• **ITANI, Norihiko
Kawasaki-shi, Kanagawa, 211-8588 (JP)**
• **YAMAZAKI, Takashi
Chiyoda, Tokyo, 100-8959 (JP)**

(74) Representative: **Hoffmann Eitle
Patent- und Rechtsanwälte PartmbB
Arabellastraße 30
81925 München (DE)**

(54) **ARITHMETIC PROGRAM, ARITHMETIC METHOD, AND INFORMATION PROCESSING DEVICE**

(57) An arithmetic program for causing a computer to repeatedly execute a process includes creating an Ising model based on a training data set that includes a plurality of pieces of training data in which an input variable and an evaluation value are associated with each other, searching for a value of a recommended input variable based on the Ising model, giving a variation to the searched value of the recommended input variable and calculating the evaluation value for the value of the recommended input variable after the variation is given, and adding the value of the recommended input variable and the calculated evaluation value to the training data set as new training data when the value of the recommended input variable does not exist in the training data included in the training data set, and updating a statistical value of the evaluation value of the training data and the evaluation value for the value of the recommended input variable after the variation is given as the evaluation value of the training data when the value of the recommended input variable exists in the training data included in the training data set.

FIG. 6A

100

- STORAGE UNIT — 10
- INITIAL POINT GENERATION UNIT — 20
- EVALUATION UNIT — 30
- FMQA EXECUTION UNIT — 40
- TRAINING DATA UPDATE UNIT — 50
- OUTPUT UNIT — 60

EP 4 575 916 A1

## Description

FIELD

The embodiment discussed herein is related to an arithmetic program, an arithmetic method, and an information processing device.

BACKGROUND

Techniques related to optimization problems have been disclosed.

Citation List

Patent Document

Japanese National Publication of International Patent Application No. 2021-504836, Japanese Laid-open Patent Publication No. 2023-75612
Japanese Laid-open Patent Publication No. 2022-85164
U.S. Patent Publication No. 2020/0242504
U.S. Patent Publication No. 2020/0090071

SUMMARY OF INVENTION

TECHNICAL PROBLEM

For example, it has been considered to achieve optimization by performing sampling using an Ising model in a QUBO format. However, it is difficult to obtain a robust solution.
In one aspect, an object of the present case is to provide an arithmetic program, an arithmetic method, and an information processing device capable of obtaining a robust solution.

SOLUTION TO PROBLEM

According to an aspect of the embodiments, an arithmetic program for causing a computer to repeatedly execute a process includes creating an Ising model based on a training data set that includes a plurality of pieces of training data in which an input variable and an evaluation value are associated with each other, searching for a value of a recommended input variable based on the Ising model, giving a variation to the searched value of the recommended input variable and calculating the evaluation value for the value of the recommended input variable after the variation is given, and adding the value of the recommended input variable and the calculated evaluation value to the training data set as new training data when the value of the recommended input variable does not exist in the training data included in the training data set, and updating a statistical value of the evaluation value of the training data and the evaluation value for the value of the recommended input variable after the variation is given as the evaluation value of the training data when the value of the recommended input variable exists in the training data included in the training data set.

ADVANTAGEOUS EFFECTS OF INVENTION

A robust solution may be obtained.

BRIEF DESCRIPTION OF DRAWINGS

FIG. 1 is a diagram exemplifying a search for a solution in a QUBO format;
FIG. 2 is a diagram exemplifying an optimal solution;
FIG. 3 is a flowchart illustrating a repeating unit in an FMQA;
FIG. 4 is a diagram for explaining the principle of the present embodiment;
FIG. 5A is a diagram exemplifying a training data set, FIG. 5B is a diagram exemplifying an updated training data set, and FIG. 5C is a diagram exemplifying an averaged factorization machine (FM) model;

FIG. 6A is a block diagram exemplifying an overall configuration of an information processing device, and FIG. 6B is a block diagram exemplifying a hardware configuration of the information processing device;

FIG. 7 is a flowchart illustrating exemplary operation of the information processing device;

FIG. 8 is a diagram exemplifying a minimization problem; and

FIG. 9 is a diagram illustrating a simulation result.

DESCRIPTION OF EMBODIMENTS

A binary variable sampling technique is used as a technique for searching a large number of combinations, orders, and the like for a good solution having a high evaluation value. Examples of the binary variable sampling technique include a sampling technique for randomly performing sampling, a sampling technique using an Ising model in a QUBO format, and the like.

The sampling technique for randomly performing sampling allows sampling to be easily performed, but has a disadvantage that sampling efficiency is poor and that the number of times of sampling increases to obtain a good solution with high accuracy.

In view of the above, it is conceivable to utilize the sampling technique using an Ising model in the QUBO format.

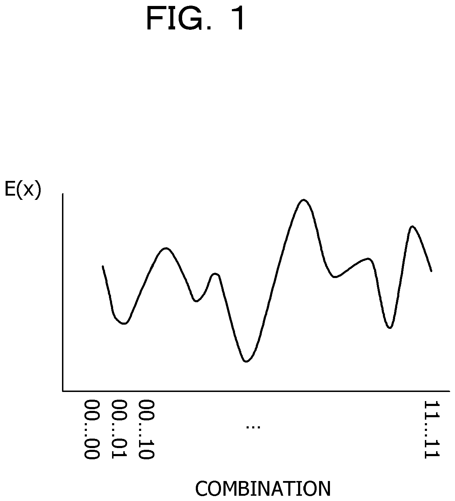

Here, the QUBO format stands for quadratic unconstrained binary optimization, which is a format in which binary optimization is allowed without a secondary constraint. The QUBO format may be expressed as in the following formula, for example. Note that $x_i = 0$ or 1 ($i = 1, ..., N$) holds. A coupling coefficient of $x_i$ and $x_j$ is denoted by $W_{ij}$. A bias coefficient of $x_i$ is denoted by $b_i$. The first term on the right side is a quadratic term, which represents an interaction. The second term on the right side is a linear term, which represents a bias action. The third term on the right side is a constant term. In the QUBO format, as exemplified in FIG. 1, a good solution x for minimizing E(x) representing energy is searched for according to the following formula.

[Math. 1]

$$E(\boldsymbol{x}) = - \sum_{i,j} W_{ij} x_i x_j - \sum_i b_i x_i + \text{const.}$$

Optimization problems exist in various industries including a distribution industry and a manufacturing industry. For those problems, an optimization algorithm for obtaining an exact solution that achieves a highest effect in calculation has been studied.

Here, the exact solution indicates a solution having a highest evaluation index. For example, in a production line, the evaluation index includes a production completion time, a delivery time, a production cost, and the like. In boxing work, the evaluation index includes a waste material amount, a working time, and the like. The optimization algorithm is an algorithm that uses one or more evaluation indexes as an objective function and performs optimization such that the objective function becomes favorable. Note that, in the production line, input variables are conditions such as a working time needed for each product in addition to initial order of input of products into the production line. In the boxing work, input variables are conditions such as a size of each product, a weight of each product, a box size, and the like in addition to initial order of boxing of products. A solution to be obtained is order of input of the products into the production line, or the like. In the boxing work, a solution to be obtained is boxing order of the products, or the like.

According to the optimization algorithm, an exact solution having the highest evaluation index may be obtained. However, since various variations may occur in practice when an attempt is made to apply the exact solution obtained by those optimization algorithms, it is difficult to perform operation according to the exact solution, or it is conceivable that a physical property may not be obtained according to the exact solution and may be, as a result, slightly deviated from the exact solution.

Here, an exact solution obtained by an existing approach is often a solution that may locally obtain a high effect. Therefore, it is conceivable that, when work content and a physical property deviate from the exact solution (= tolerance occurs), an effect is drastically reduced, and an assumed effect may not be obtained. Furthermore, since a variation factor in a field is not considered even if the work content is in accordance with the exact solution, it is conceivable that the assumed effect may not be actually obtained.

For example, in the boxing work, phenomena are conceivable in which a time needed for work becomes longer due to a difference in a skill level of a worker, packing work according to the exact solution may not be performed due to a size error of a product handled in the work, and the like. Those phenomena may occur in an actual field. When those phenomena occur, the work content deviates from the exact solution.

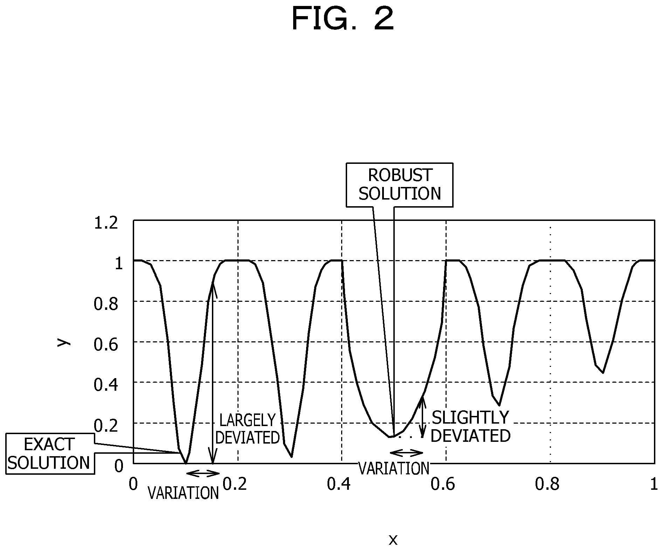

FIG. 2 is a diagram exemplifying an optimal solution. In FIG. 2, the x-axis represents a value obtained by converting a bit array of 0 and 1 illustrated in FIG. 1 into a numerical value from 0 to 1. The y-axis represents an objective function, and corresponds to $E(x)$ in FIG. 1. FIG. 2 indicates that a better result is obtained as a value of y is smaller.

For example, the optimal solution around x = 0.1 has the smallest value of y, and thus it is an exact solution. Although the value of y is the smallest in this exact solution, the solution exists locally, and accordingly, the value of y is largely increased by the value of x only slightly deviating from the exact solution. This is because, in the graph of FIG. 2, the width of the valley portion near the exact solution in the horizontal axis direction is small. On the other hand, in the optimal solution around x = 0.5, although the value of y is not as small as the exact solution, the solution does not exist locally as compared with the exact solution. That is, in the graph of FIG. 2, the width of the valley portion near the optimal solution around x = 0.5 in the horizontal axis direction is larger than the width of the valley portion near the optimal solution (exact solution) around x = 0.1 in the horizontal axis direction. Thus, even if the work content slightly deviates from the optimal solution, the value of y is not largely increased. In an actual field, there is a demand for a highly robust optimization algorithm that may obtain an effect close to an optimal solution even when work content deviates from the optimal solution.

However, an optimization problem has a problem that the problem is complex, difficult to formulate as an objective function, and has a high calculation cost. In view of the above, it is conceivable to use a black-box optimization method for searching for an optimum input by repeating a process of setting an input to be a new search point based on the input and output data of the optimization problem, obtaining an output thereof, and newly conducting a search based on a result thereof. As one of such optimization methods, it is conceivable to use an FM (machine learning approach) model with low calculation cost.

For example, a factorization machine with quantum annealing (FMQA) and the like are exemplified. The FMQA is an approach obtained by combining quantum annealing (QA) and an FM. The FMQA is an approach for performing interactive sampling in which an FM model in the QUBO format is created from training data, a good solution is obtained by the QA, an evaluation value of the good solution is analyzed by a characteristic solver, and a result is added to the training data. Besides, examples of the sampling technique using a model in the QUBO format include a technique of a factorization machine with a digital annealer (FMDA), and the like. The FMDA is obtained by replacing the QA part of the FMQA with a digital annealer (DA).

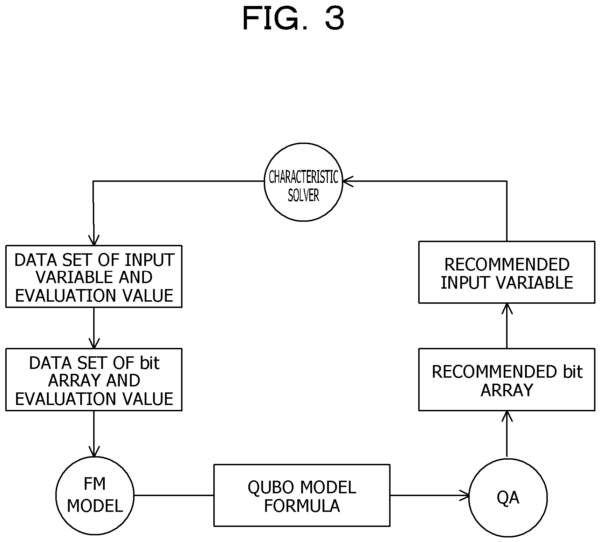

Here, an outline of the FMQA will be described. FIG. 3 is a flowchart illustrating a repeating unit in the FMQA. First, a training data set including a plurality of pieces of data regarding input variables and evaluation values is prepared. At a time of first execution, the training data set is randomly prepared. The input variables indicate values of x on the horizontal axis described with reference to FIG. 2. For example, a plurality of values are randomly generated within a range of x = 0 to 1.27. The evaluation values indicate evaluation values calculated by the characteristic solver for the individual input variables.

Next, the input variables are converted into a bit array for each piece of the training data included in the training data set. For example, decimal values obtained by multiplying the input variables of 0 to 1.27 by 100 are converted into 7-bit binary numbers. As a result, the input variables may be converted into a vector format in which $x = (x_1, x_2, ..., x_M)$ and each value is a binary value of 0 or 1.

Next, an FM model is created using the training data set and is subject to the QUBO, thereby creating an Ising model in the QUBO format. Since the FM is in the QUBO format, creating an FM is equivalent to creating an Ising model in the QUBO format. As long as an Ising model in the QUBO format may be created, any other machine learning models may also be used.

Next, the created Ising model in the QUBO format is optimized using the QA, and a good solution (recommended bit array) with the best evaluation value is generated.

Next, the recommended bit array is returned to a numerical value in the range of x = 0 to 1.27, thereby calculating a recommended input variable.

Next, the recommended input variable is analyzed by the characteristic solver to calculate an evaluation value.

Next, an evaluation result (set of the recommended input variable and the evaluation value) is newly added to the training data set as training data. By those series of processes being repeated, the training data set is updated, and an optimal solution may be obtained.

Note that, in FIG. 3, the part of the QA may be replaced with a DA or the like, and any other method may be used as long as it is an Ising machine capable of solving the QUBO. Furthermore, the Ising model may be solved using software in addition to the case of using a dedicated Ising machine for solving the QUBO.

Such a sampling technique is an approach for obtaining an exact solution having a minimum evaluation value. Thus, a robust solution in consideration of variation is not necessarily obtained.

In view of the above, it is conceivable to use a multi-objective robust design optimization (MORDO) method as a robust optimization method. According to this method, an approach is taken in which a design variable to be searched is varied by repetitive sampling during an optimization operation and an obtained index is statistically processed and evaluated. An average value and a standard deviation value of the objective function are used as evaluation values, and a solution with a higher evaluation value is finally calculated as an optimal solution. According to the MORDO method, a sufficient number of sampling points are repeatedly evaluated in the vicinity of an input variable, whereby a highly robust solution may be obtained. However, in a case of using a characteristic solver with a higher calculation cost, the calculation cost increases, and is not realistic.

In view of the above, an exemplary case where a robust solution may be obtained while suppressing a calculation cost will be described in the following embodiment.

[First Embodiment]

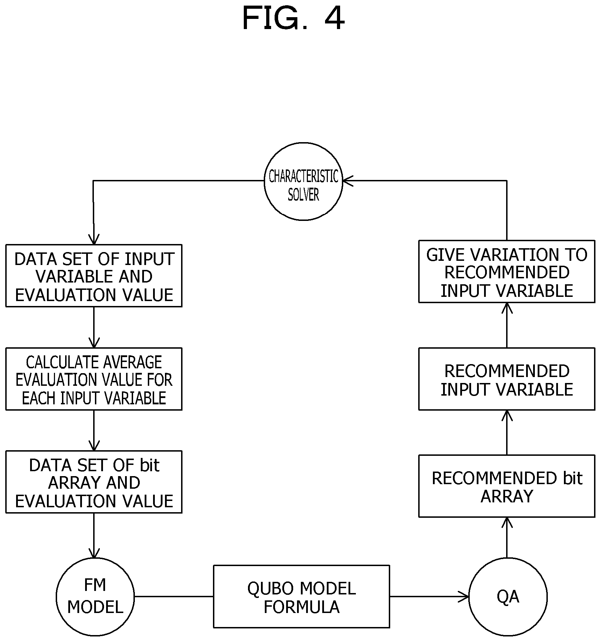

First, the principle of the present embodiment will be described. FIG. 4 is a diagram for explaining the principle of the present embodiment. As exemplified in FIG. 4, FMQA as described with reference to FIG. 3 is used. However, a recommended input variable obtained by QA is varied, and an evaluation value is calculated by a characteristic solver. Next, a set of a recommended input variable and an evaluation value calculated by varying the recommended input variable is added to a training data set as new training data. As a result, input variables having a plurality of different evaluation values are obtained. Thus, a statistical value of the evaluation values (e.g., average value, weighted arithmetic average value, etc.) is calculated for each input variable. For the input variables having the plurality of different evaluation values, this statistical value is used as an evaluation value.

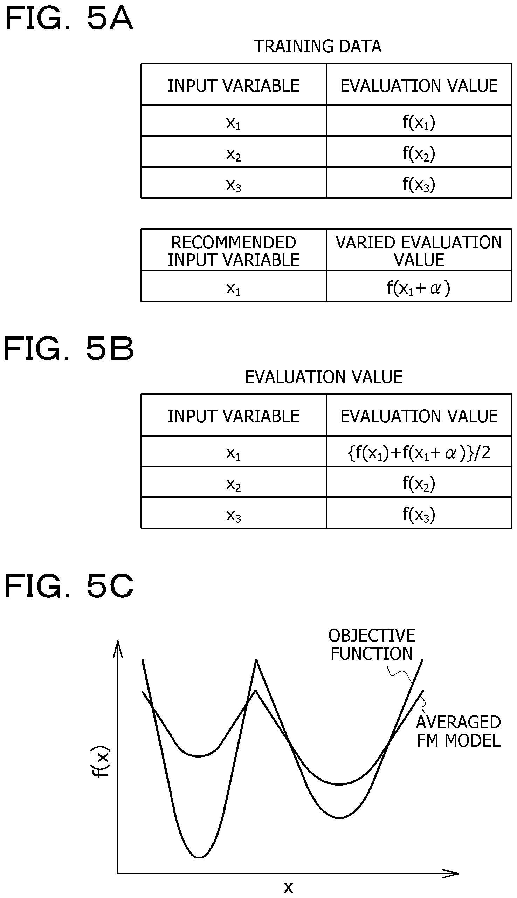

For example, FIG. 5A exemplifies the training data set. As exemplified in FIG. 5A, it is assumed that the training data set includes input variables $x_1$, $x_2$, $x_3$, and so on. In addition, an analyzed evaluation value for the input variable $x_1$ is assumed to be $f(x_1)$, an analyzed evaluation value for the input variable $x_2$ is assumed to be $f(x_2)$, and an analyzed evaluation value for the input variable $x_3$ is assumed to be $f(x_3)$. In this case, it is assumed that the recommended input variable is $x_1$ and a variation a is given. Since $f(x_1 + a)$ is calculated as an evaluation value in this case, there are two evaluation values for the input variable $x_1$, which are $f(x_1)$ and $f(x_1 + a)$.

Accordingly, as exemplified in FIG. 5B, $(f(x_1) + f(x_1 + a))/2$, which is an average value of those evaluation values, is updated as the evaluation value for the input variable $x_1$. Note that, when there is no recommended input variable in the training data set, the recommended input variable and the evaluation value calculated by varying the input variable are added to the training data set as new training data.

When the process of FIG. 4 is repeated, the training data set is updated by varying the recommended input variable, which is recommended as a good solution with the best evaluation value. As a result, it becomes possible to construct a model in which variance in the evaluation value caused by the added variation is averaged.

For example, in a case where the exact solution described with reference to FIG. 2 serves as the recommended input variable, the evaluation value is degraded by the given variation. Accordingly, an input variable near the exact solution is hardly recommended as a good solution. On the other hand, in a case where the robust solution described with reference to FIG. 2 serves as the recommended input variable, the evaluation value remains favorable even when the variation is given, and thus an input variable near the robust solution is likely to be recommended as a good solution. Accordingly, as exemplified in FIG. 5C, it becomes possible to obtain a highly robust solution in which the variance in the evaluation value caused by the variation is small on average.

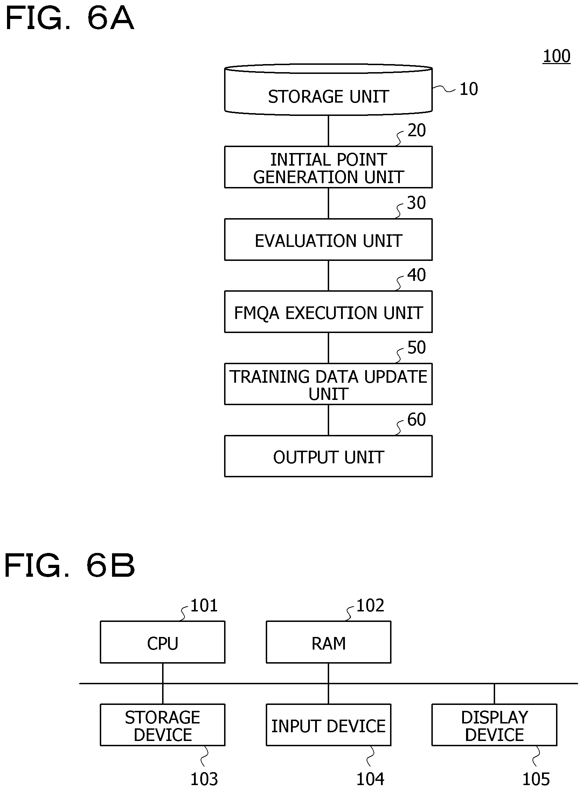

Hereinafter, a device configuration for achieving the principle described above will be described. FIG. 6A is a block diagram exemplifying an overall configuration of an information processing device 100. As exemplified in FIG. 6A, the information processing device 100 includes a storage unit 10, an initial point generation unit 20, an evaluation unit 30, an FMQA execution unit 40, a training data update unit 50, an output unit 60, and the like.

FIG. 6B is a block diagram exemplifying a hardware configuration of the information processing device 100. As exemplified in FIG. 6B, the information processing device 100 includes a CPU 101, a RAM 102, a storage device 103, an input device 104, a display device 105, and the like.

The central processing unit (CPU) 101 is a central processing device. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. As the storage device 103, for example, a read only memory (ROM), a solid state drive (SSD) such as a flash memory, a hard disk to be driven by a hard disk drive, or the like may be used. The storage device 103 stores an arithmetic program. The input device 104 is an input device such as a keyboard, a mouse, or the like. The display device 105 is a display device such as a liquid crystal display (LCD). The storage unit 10, the initial point generation unit 20, the evaluation unit 30, the FMQA execution unit 40, the training data update unit 50, the output unit 60, and the like are implemented by the CPU 101 executing the arithmetic program. Note that hardware such as a dedicated circuit may be used as the storage unit 10, the initial point generation unit 20, the evaluation unit 30, the FMQA execution unit 40, the training data update unit 50, the output unit 60, and the like.

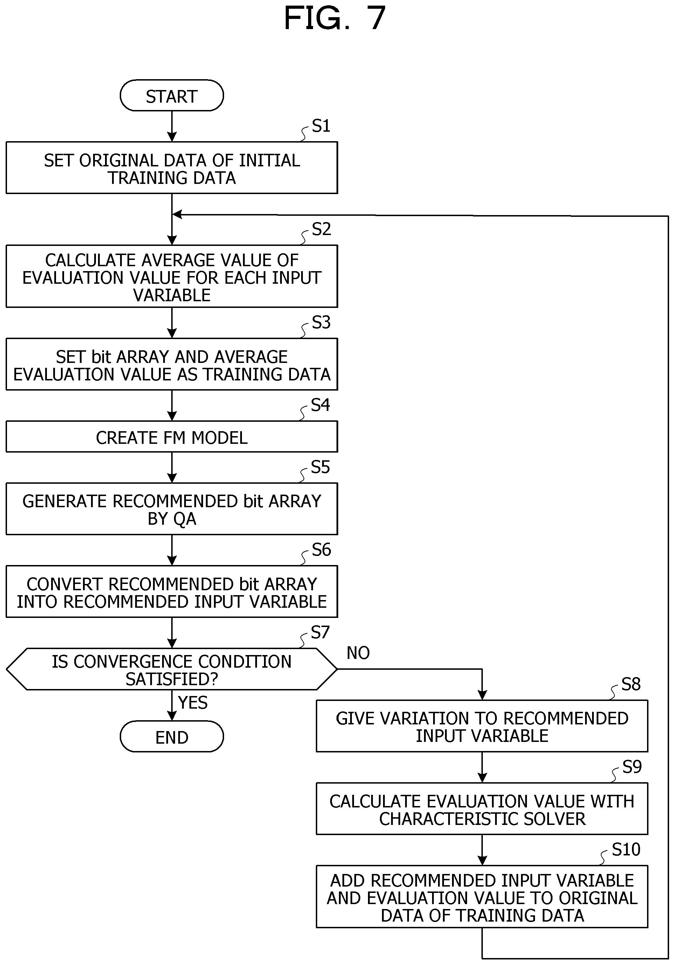

FIG. 7 is a flowchart illustrating exemplary operation of the information processing device 100. As exemplified in FIG. 7, the initial point generation unit 20 sets original data of initial training data, and stores it in the storage unit 10 (step S1).

Next, the evaluation unit 30 calculates an average value of evaluation values for each input variable (step S2). If step S2 is executed for the first time, a plurality of evaluation values has not yet been obtained for the input variable, and thus each evaluation value is treated as an average value.

Next, the training data update unit 50 associates the bit array and the average value of the evaluation values with the input variable for which the average value of the evaluation values has been calculated, and sets them as training data (step S3). If step S3 is executed for the first time, the original data of step S1 is treated as the training data.

Next, the FM QA execution unit 40 creates an FM model using the training data obtained in step S3 (step S4). Note that, since the FM is in the QUBO format, creating an FM is equivalent to creating an Ising model in the QUBO format. As long as an Ising model in the QUBO format may be created, any other machine learning models may also be used.

Next, the FMQA execution unit 40 generates recommended points (recommended bit array) corresponding to a set number of recommendations using the FM created in step S4 (step S5). The set number of recommendations is preset by a user. The recommended point is one good solution (recommended point) giving the best evaluation value. Alternatively, the recommended point is one or more good solutions (recommended points) having an evaluation value equal to or higher than a threshold. Alternatively, the recommended points are a plurality of good solutions (recommended points) having top evaluation values up to a predetermined place.

Next, the FMQA execution unit 40 converts the recommended bit array generated in step S5 into a recommended input variable (step S6).

Next, the FMQA execution unit 40 determines whether or not a convergence condition is satisfied (step S7). For example, the FMQA execution unit 40 determines whether or not the number of iterations has reached the upper limit. It is sufficient if the number of times of execution of step S7 is treated as the number of iterations. The upper limit number of the number of iterations is preset by the user. If it is determined as "Yes" in step S7, the execution of the flowchart is terminated.

If it is determined as "No" in step S7, the FMQA execution unit 40 gives a variation to the recommended input variable (step S8).

Next, the evaluation unit 30 calculates, using a solver, an evaluation value for the recommended input variable to which the variation has been given (step S9).

Next, the training data update unit 50 adds, as training data, the recommended input variable before the variation is given and the evaluation value calculated in step S9 to the training data set (step S10). Thereafter, step S2 and the subsequent steps are executed again.

The output unit 60 outputs a result of the process of FIG. 7. For example, the output result is displayed on the display device 105. For example, the output unit 60 may output the contents of the training data set, or may output, as an optimal solution, training data having a higher evaluation value in the training data set.

According to the present embodiment, the searched recommended input variable is varied, and an evaluation value is calculated for the varied recommended input variable. When there is no recommended input variable in the training data included in the training data set, the recommended input variable and the calculated evaluation value are added to the training data set as new training data. When there is a recommended input variable in the training data included in the training data set, a statistical value of the evaluation value of the training data and the evaluation value for the varied recommended input variable is updated as the evaluation value of the training data. By updating the training data set in this manner, a robust solution may be obtained.

While one variation value = a is given to the recommended input variable in the example described above, it may two or more. For example, a variation value = $a_1$ and a variation value = $a_2$ may be given to the recommended input variable $x_1$. Since evaluation values $f(x_1)$, $f(x_1 + a_1)$, and $f(x_1 + a_2)$ are obtained for the recommended input variable $x_1$ in this case, it is sufficient if a statistical value, such as an average value of those evaluation values, is calculated. However, since a calculation cost of the characteristic solver is high, it is preferable to give one variation value to the recommended input variable.

Furthermore, when the variation value is too large, the evaluation value for the robust solution may be degraded. In view of the above, an upper limit may be set for the variation value. For example, the upper limit of the variation value may be set to a fixed value. For example, since a user is enabled to change the upper limit of the variation value, an upper limit value suitable for an optimization problem may be set. On the other hand, when the variation value is too small, the probability that the exact solution is searched for as an optimal solution may increase. In view of the above, a lower limit may be set for the variation value. For example, the lower limit of the variation value may be set to a fixed value. For example, since the user is enabled to change the lower limit of the variation value, a lower limit value suitable for the optimization problem may be set.

(Simulation Result)

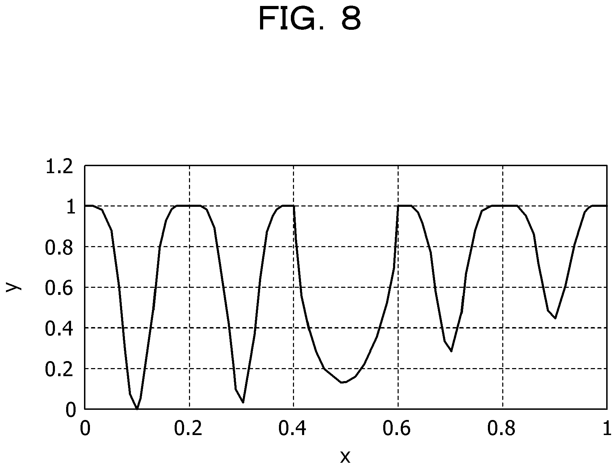

Hereinafter, a simulation result of setting a virtual problem and performing the arithmetic process according to the above-described embodiment will be described. Specifically, a maximization problem of a formula $f_b(x)$, which is a standard problem of the following formula (2), is treated as a minimization problem, and the minimization problem of the following formula (3) is solved. Note that the following formula (3) is expressed by FIG. 8. An exact solution is around x = 0.1, and a robust solution is around x = 0.5.

[Math. 2]

$$f_b(x) = \begin{cases} e^{-2\ln2\left(\frac{x-0.1}{0.8}\right)^2} |\sin(5\pi x)|^{0.5}: & 0.4 < x \le 0.6 \\ e^{-2\ln2\left(\frac{x-0.1}{0.8}\right)^2} \sin^6(5\pi x): & \text{otherwise.} \end{cases} \quad (2)$$

[Math. 3]

$$f_b'(x) = 1 - f_b(x) \quad (3)$$

Decimal values obtained by multiplying individual values of x = 0 to 1.27 by 100 were converted into 7-bit binary numbers. An FM model of the following formula (4) was used. In the FM model, k = 3, and the initial training data was 10 pieces of random data. An iteration count (number of iterations) was set to 300. A single-objective genetic algorithm (GA) was used for an optimization engine. The number of evolution generations in the GA was set to 50 generations. The number of individuals was set to 10 individuals. The initial value was set to 10 pieces of random data same as the initial training data of the FM model. When the recommended input variable was varied, white noise of [-0.05, 0.05] was set as a random number at the time of input to the characteristic solver.

[Math. 4]

$$f(x) = w_0 + \sum_{i=1}^{D} w_i x_i + \sum_{i=1}^{D} \sum_{j=i+1}^{D} \sum_{f=1}^{k} v_{if} v_{jf} x_i x_j \quad (4)$$

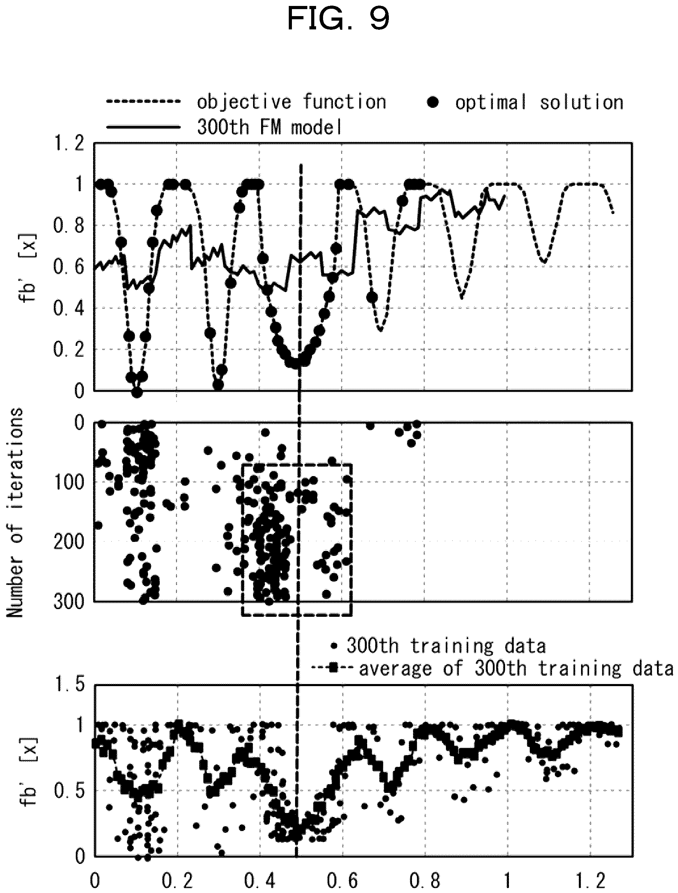

In respective upper, middle, and lower graphs in FIG. 9, the horizontal axis represents an input variable x. In the upper and lower graphs in FIG. 9, the vertical axis represents fb'(x). In the middle graph in FIG. 9, the vertical axis represents the number of iterations. In the upper graph in FIG. 9, the "objective function" represents the minimization problem illustrated in FIG. 8. The "optimal solution" represents an optimal solution. The "300th FM model" represents the FM model obtained by 300 times of iterations. In the lower graph in FIG. 9, the "300th training data" represents 300th training data, and the "average of 300th training data" represents an average value of the 300th training data.

As illustrated in the middle graph in FIG. 9, while around x = 0.1 is recommended as a recommended input variable when the number of iterations is small, as the number of iterations increases, around x = 0.5 is recommended as a recommended input variable. Thus, it may be seen that a robust solution may be obtained.

In the example described above, the FMQA execution unit 40 corresponds to an execution unit that repeatedly executes a process of creating an Ising model based on a training data set including a plurality of pieces of training data in which an input variable and an evaluation value are associated with each other, a process of searching for a recommended input variable for the Ising model, and a process of adding the recommended input variable and an evaluation value calculated by giving a variation to the recommended input variable to the training data set as new training data when the recommended input variable does not exist in the training data included in the training data set and updating a statistical value of the evaluation value of the training data and the evaluation value calculated for the recommended input variable after the variation is given as the evaluation value of the training data when the recommended input variable exists in the training data included in the training data set.

While the embodiment has been described above in detail, the embodiment is not limited to such a particular embodiment, and various modifications and alterations may be made within the scope of the gist of the embodiment described in the claims.

**Claims**

1. An arithmetic program for causing a computer to repeatedly execute a process comprising:

creating an Ising model based on a training data set that includes a plurality of pieces of training data in which an input variable and an evaluation value are associated with each other;
searching for a value of a recommended input variable based on the Ising model;
giving a variation to the searched value of the recommended input variable and calculating the evaluation value for the value of the recommended input variable after the variation is given; and
adding the value of the recommended input variable and the calculated evaluation value to the training data set as new training data when the value of the recommended input variable does not exist in the training data included in the training data set, and updating a statistical value of the evaluation value of the training data and the evaluation value for the value of the recommended input variable after the variation is given as the evaluation value of the training data when the value of the recommended input variable exists in the training data included in the training data set.

2. The arithmetic program according to claim 1, wherein
the statistical value includes an average value.

3. The arithmetic program according to claim 1, wherein
one variation value is set when the variation is given to the value of the recommended input variable.

4. The arithmetic program according to claim 3, wherein
the variation value includes a random value using a random number.

5. The arithmetic program according to claim 1, wherein
an upper limit is set to a variation value when the variation is given to the value of the recommended input variable.

6. The arithmetic program according to claim 1, wherein
the input variable of the training data is converted into vector data of a binary value when the Ising model is created.

7. An arithmetic method implemented by a computer, the arithmetic method including repeatedly executed process comprising:

creating an Ising model based on a training data set that includes a plurality of pieces of training data in which an input variable and an evaluation value are associated with each other;
searching for a value of a recommended input variable based on the Ising model;
giving a variation to the searched value of the recommended input variable and calculating the evaluation value for the value of the recommended input variable after the variation is given; and
adding the value of the recommended input variable and the calculated evaluation value to the training data set as new training data when the value of the recommended input variable does not exist in the training data included in the training data set, and updating a statistical value of the evaluation value of the training data and the evaluation value for the value of the recommended input variable after the variation is given as the evaluation value of the training data when the value of the recommended input variable exists in the training data included in the training data set.

8. An arithmetic apparatus comprising:

a processor configured to repeatedly execute a process of creating an Ising model based on a training data set that includes a plurality of pieces of training data in which an input variable and an evaluation value are associated with each other;
searching for a value of a recommended input variable based on the Ising model;
giving a variation to the searched value of the recommended input variable and calculating the evaluation value for the value of the recommended input variable after the variation is given; and
adding the value of the recommended input variable and the calculated evaluation value to the training data set as new training data when the value of the recommended input variable does not exist in the training data included in the training data set, and updating a statistical value of the evaluation value of the training data and the evaluation value for the value of the recommended input variable after the variation is given as the evaluation value of the training data when the value of the recommended input variable exists in the training data included in the training data set.

# FIG. 1

# FIG. 2

# FIG. 3

# FIG. 4

CHARACTERISTIC SOLVER

DATA SET OF INPUT VARIABLE AND EVALUATION VALUE

CALCULATE AVERAGE EVALUATION VALUE FOR EACH INPUT VARIABLE

DATA SET OF bit ARRAY AND EVALUATION VALUE

FM MODEL

QUBO MODEL FORMULA

QA

GIVE VARIATION TO RECOMMENDED INPUT VARIABLE

RECOMMENDED INPUT VARIABLE

RECOMMENDED bit ARRAY

# FIG. 5A

TRAINING DATA

| INPUT VARIABLE | EVALUATION VALUE |
|---|---|
| $x_1$ | $f(x_1)$ |
| $x_2$ | $f(x_2)$ |
| $x_3$ | $f(x_3)$ |

| RECOMMENDED INPUT VARIABLE | VARIED EVALUATION VALUE |
|---|---|
| $x_1$ | $f(x_1+\alpha)$ |

# FIG. 5B

EVALUATION VALUE

| INPUT VARIABLE | EVALUATION VALUE |
|---|---|
| $x_1$ | $\{f(x_1)+f(x_1+\alpha)\}/2$ |
| $x_2$ | $f(x_2)$ |
| $x_3$ | $f(x_3)$ |

# FIG. 5C

OBJECTIVE FUNCTION

AVERAGED FM MODEL

## FIG. 6A

100

STORAGE UNIT —— 10

INITIAL POINT
GENERATION UNIT —— 20

EVALUATION UNIT —— 30

FMQA EXECUTION UNIT —— 40

TRAINING DATA UPDATE
UNIT —— 50

OUTPUT UNIT —— 60

## FIG. 6B

CPU —— 101

RAM —— 102

STORAGE
DEVICE —— 103

INPUT DEVICE —— 104

DISPLAY
DEVICE —— 105

# FIG. 7

START

**S1** SET ORIGINAL DATA OF INITIAL TRAINING DATA

**S2** CALCULATE AVERAGE VALUE OF EVALUATION VALUE FOR EACH INPUT VARIABLE

**S3** SET bit ARRAY AND AVERAGE EVALUATION VALUE AS TRAINING DATA

**S4** CREATE FM MODEL

**S5** GENERATE RECOMMENDED bit ARRAY BY QA

**S6** CONVERT RECOMMENDED bit ARRAY INTO RECOMMENDED INPUT VARIABLE

**S7** IS CONVERGENCE CONDITION SATISFIED?

YES → END

NO →

**S8** GIVE VARIATION TO RECOMMENDED INPUT VARIABLE

**S9** CALCULATE EVALUATION VALUE WITH CHARACTERISTIC SOLVER

**S10** ADD RECOMMENDED INPUT VARIABLE AND EVALUATION VALUE TO ORIGINAL DATA OF TRAINING DATA

FIG. 8

# FIG. 9

**EUROPEAN SEARCH REPORT**

Europäisches
Patentamt
European
Patent Office
Office européen
des brevets

Application Number

EP 24 21 9377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIONG THYE GOH ET AL: "A Hybrid Framework Using a QUBO Solver For Permutation-Based Combinatorial Optimization", ARXIV.ORG, CORNELL UNIVERSITY LIBRARY, 201 OLIN LIBRARY CORNELL UNIVERSITY ITHACA, NY 14853, 6 July 2021 (2021-07-06), XP091000804, * abstract * * page 1 - page 13 * | 1-8 | INV. G06N5/01 G06N7/01 G06N20/00 ADD. G06N3/126 |
| A | MULVEY JOHN M. ET AL: "Robust Optimization of Large-Scale Systems", OPERATIONS RESEARCH., vol. 43, no. 2, 1 April 1995 (1995-04-01), pages 264-281, XP093274252, US ISSN: 0030-364X, DOI: 10.1287/opre.43.2.264 * page 264 - page 268 * | 1-8 | |
| A | KEIVAN SHARIATMADAR ET AL: "An introduction to optimization under uncertainty -- A short survey", ARXIV.ORG, CORNELL UNIVERSITY LIBRARY, 201 OLIN LIBRARY CORNELL UNIVERSITY ITHACA, NY 14853, 1 December 2022 (2022-12-01), XP091384270, * 3.1, 3.3 * | 1-8 | TECHNICAL FIELDS SEARCHED (IPC) G06N |

The present search report has been drawn up for all claims

| Place of search | Date of completion of the search | Examiner |
|---|---|---|
| The Hague | 6 May 2025 | Keresztury, Bence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021504836 A
- JP 2023075612 A
- JP 2022085164 A
- US 20200242504 A
- US 20200090071 A